Europäisches Patentamt

European Patent Office

Office européen des brevets

(19)

(11) Publication number: **0 234 136**
**B1**

(12)

# EUROPEAN PATENT SPECIFICATION

(45) Date of publication of the patent specification:
**27.12.89**

(51) Int. Cl.⁴: **F16H 47/04**

(21) Application number: **86400390.0**

(22) Date of filing: **24.02.86**

(54) **Hydromechanical transmission.**

(43) Date of publication of application:
**02.09.87 Bulletin 87/36**

(45) Publication of the grant of the patent:
**27.12.89 Bulletin 89/52**

(84) Designated Contracting States:
**DE FR GB IT**

(56) References cited:
**DE-B- 2 307 100**
**FR-A- 2 467 332**
**GB-A- 857 480**
**US-A- 3 095 757**
**US-A- 3 988 949**

(73) Proprietor: **SHIMADZU CORPORATION, 378,**
**Ichinofunairi-cho Kawaramachi-dori Nijo Sagaru,**
**Nakagyo-ku Kyoto 604(JP)**

(72) Inventor: **Kita, Yasuo, 62-39, Ohtsuka Motoyashiki-cho,**
**Yamashina-ku Kyoto 607(JP)**
Inventor: **Fujii, Hiroyuki, 2-4-16, Biwadai Uji-shi,**
**Kyoto 611(JP)**

(74) Representative: **Rodhain, Claude et al, Cabinet Claude**
**Rodhain 30, rue la Boétie, F-75008 Paris(FR)**

## Description

The present invention relates to a hydromechanical transmission which can be used in various industrial fields as an efficient continuously variable transmission.

A hydrostatic power transmission which uses hydraulic pump/motors (reversible hydraulic machine) and is employed as a continuous variable transmission is well known in the art. Such a transmission presents the advantage of enabling the output speed to be continuously varied.

However, its efficiency is not always high. Moreover, the range of speeds it allows to attain is not satisfactorily wide. Accordingly, in an attempt to overcome these limitations, a hydromechanical transmission (HMT) was further developed and published in the prior in which such a hydrostatic power transmission (HST) is used in conjunction with a differential gear, the transmission of power being shared in both the HST and the differential gear so as to simultaneously attain a high transmission efficiency of the gearing and the continuous variability of the HST : see Chieo Ishihara : "Hydrodynamic Engineering", Asaka-shobo, Japan and Sadao Ishihara : "Theory and Practice of Piston Pump Motor", Corona-sha, Japan. More specifically, this hydromechanical transmission comprises : a differential mechanism having first, second, third input/output ends for forming either a first mechanical transmission line with low output speeds between the first and second input/output ends or a second mechanical transmission line with high output speeds between the first and third input/output ends ; a hydraulic power transmission mechanism having two hydraulic pump/motors one of which acting as a hydraulic pump when the other acts as a hydraulic motor, the input/output shaft of one of the pump/motors being connected to the second input/output end of the differential mechanism while the input/output shaft of the other pump/motor is connected to the third input/output shaft, both pump/motors cooperating to constitute a continuous variable hydraulic power transmission line ; a low-speed clutch for bringing the transmission end of the first mechanical transmission line into and out of engagement with a common output rotary element disposed on the input or output side ; and a high-speed clutch for bringing the transmission end of the second mechanical transmission line into and out of engagement with said output common rotary element. When one of the clutches is engaged, the other is disengaged and vice versa to select either the low-speed or the high-speed mode.

A hydromechanical transmission which is somewhat similar to the same is known by U.S. Patent 3 988 949.

This known structure has the problem that, when it is switched from one mode to the other, a shock tends to occur. More specifically, in such a transmission, a portion of the power applied is transmitted toward the output through one mechanical transmission line including gears. The remaining power is directed toward the output through the hydraulic power transmission line including both the pump/motors so that this power is added to the power which is transmitted by the mechanical transmission line. When a load is applied to the hydraulic transmission line, the rotary output power from this line tends to lag with respect to the output from the mechanical transmission line, due to leakage of the working fluid inside the pump/motors and to the elasticity of the hydraulic circuit. In this conventional structure, when it is switched from one mode to the other, the roles of the two pump/motors are interchanged as described later. For this reason, the effect of the aforementioned lag exerts inversely. Therefore, when for example the transmission is switched from the low-speed mode to the high-speed mode, if the low-speed clutch is disengaged and, at the same time, the high-speed clutch is engaged just when the rotational speed at the transmission output end of the second mechanical transmission line becomes equal to the rotational speed at the transmission output end of the first mechanical transmission line or after a certain period elapses from the coincidence of the speeds, then the transmission of torque from the first mechanical transmission line to the common output rotary element will be suddenly interrupted.

This causes an indeterminate operational idling period that might be called a backlash for the whole system which has to be momentarily absorbed. Then, torque is transmitted from the second mechanical transmission line to the common output rotary element. Consequently, a mechanical shock often occurs when such a switching operation is performed.

It is an object of the invention to provide a hydromechanical transmission which is equipped with a relatively simple structure to prevent with certainty shocks from occuring when the system is switched from one mode to the other.

The above object is achieved by a hydromechanical transmission which makes use of the above-described mode switching system and more precisely a hydromechanical transmission comprising a differential mechanism having first, second, third input/output ends for forming either a first low speed mechanical transmission line between the first and second input/output ends or a second high-speed mechanical transmission line between the first and third input/output ends;

a hydraulic power transmission mechanism comprising a pair of hydraulic pump/motor, one of which acting as a hydraulic pump when the other acts as a hydraulic motor, with the input/output shaft of one of the pump/motors being connected to the second input/output end of the differential mechanism and the input/output shaft of the other pump/motor connected to the third input/output end, both pump/motors cooperating to constitute continuous variable hydraulic power transmission lines;

a first low-speed clutch acting to bring the transmission output end of the first mechanical transmission line into and out of engagement with a common output rotary element;

a second high-speed clutch acting to bring the transmission output end of the second mechanical transmission line into and out of engagement with said common rotary element, said second clutch being engaged when the first clutch is disengaged and conversely for selecting either a low-speed mode or a high-speed mode; characterized in that it further comprises:

speed-detection means for detecting the rotational speeds at the transmission output ends of the mechanical transmission lines; torque-detection means for detecting the way torque transmission is achieved at said transmission ends and consisting of a pair of pressure sensors; and control means for engaging both the clutches when the rotational speeds at both the transmission ends that are detected by the speed-detection means become equal, for correcting the change speed ratio of the hydraulic power transmission mechanism until the ways torque transmission is individually achieved by both said transmission output ends as detected by the pressure sensors are interchanged, and for disengaging the clutch through which torque is no longer transmitted when the correction has been completed.

In the low-speed mode, the transmission end of the first mechanical transmission line formed between the first and second input/output ends of the differential mechanism is connected to a common rotary element mounted on the output or input side via the low speed clutch. A portion of the power applied is directed to the output through the hydraulic transmission lines formed by the hydraulic power transmission mechanism. In this case, one of the two pump/motors acts as a motor, while the other functions as a hydraulic pump.

In the high-speed mode, the transmission end of the second mechanical transmission line formed between the first and third input/output ends of the differential mechanism is connected to the common rotary element. A portion of the power applied is delivered through this mechanical transmission line. The remaining power is directed toward the output via the hydraulic transmission lines formed by the hydraulic power transmission mechanism. In this case, the roles of the two pump/motors are interchanged. In other words said one pump/motor acts as a hydraulic pump, whereas the other pump/motor acts as a motor.

The system is switched from the low-speed mode to the high-speed mode in the way described hereafter. When the low speed clutch is engaged, if the rotational speed at the transmission end of the second mechanical transmission line becomes equal to the rotational speed at the transmission end of the first mechanical transmission line, the high speed clutch is then engaged together with the low-speed clutch. Then, the transmission ratio of the hydraulic power transmission line is corrected until the torque is no longer transmitted from the first mechanical transmission line but from the second mechanical transmission line to the common rotary element. At this time, the low speed clutch is disengaged. The system is switched from the high-speed mode to the low-speed mode in a reverse way as detailed here above.

Other objects and features of the invention will appear in the course of the description that follows, and of the drawings in which :

Fig. 1 is a flow line diagram for illustrating a hydromechanical transmission according to the invention and

Fig. 2 is a graph illustrating the operational characteristics of the transmission shown in Fig. 1.

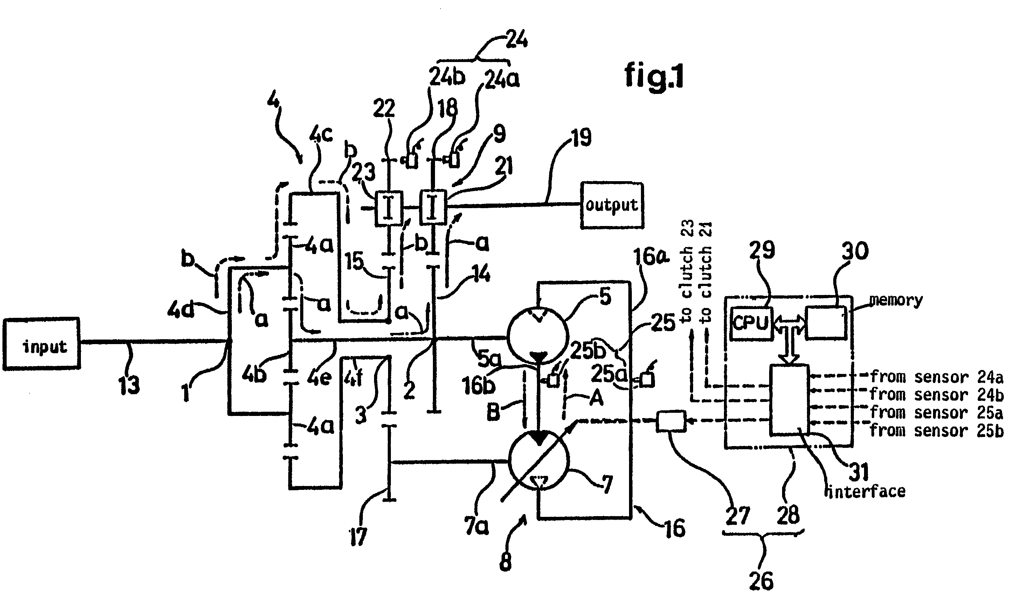

A hydromechanical transmission according to the invention is schematically shown in Fig. 1. This transmission is constituted of a differential mechanism 4, a hydraulic power transmission mechanism 8, and a mode selector mechanism 9. The differential mechanism 4 has first, second, third input/output ends 1,2,3, respectively, enabling forming either a first mechanical transmission line a between the first end 1 and the second end 2 or a second mechanical transmission line b between the first end 1 and the third end 3. The hydraulic power transmission mechanism 8 has a hydraulic pump/motor 5 of the fixed displacement type and a hydraulic pump/motor of the variable displacement type. The input/output shaft 5a of the pump/motor 5 is connected to the second end 2 of the differential mechanism 4. The input/output shaft 7a of the pump/motor 7 is coupled to the third end 3. The pump/motors 5 and 7 cooperate to constitute continuous variable hydraulic transmission lines A and B. The mode selection mechanism 9 selects either a low-speed mode, in which the output of the hydromechanical transmission is connected to the input via the first mechanical transmission line a, or a high-speed mode, in which the output is connected to the input via the second mechanical transmission line b.

The differential mechanism 4 is a planetary gear train consisting of planetary gears 4a circumferentially regularly spaced apart from one another and a sun gear 4b. The planetary pinions 4a are in mesh with an outside ring gear 4c. The planet gears 4c are mounted on a gear carrier 4d. The first input/output end 1 is provided at the center of said carrier 4d. An input shaft 13 is mounted to the end 1. The sun gear 4b is supported on a pivot 4e, which is used as the second input/output end 2. A gear 14 is fixedly secured to the second end 2. The ring gear 4c has a boss 4f that is used as the third input/output end 3. A gear 15 is coupled to the third end 3.

In the hydraulic power transmission mechanism 8, the pump/motor 5 of the fixed displacement type is connected in series with the pump/motor 7 of the variable displacement type through a hydraulic circuit 16, in the same way as in an ordinary hydrostatic power transmission. The input/output shaft 5a of the pump/motor 5 is coupled to the pivot 4e of the sun gear 4b. The input/output shaft 7a of the pump/motor 7 is connected to the ring gear 4c by means of a pinion 17.

The mode selection mechanism 9 comprises a low speed clutch 21 and a second high speed clutch 23. The clutch 21 is mounted between a low-speed gear 18 and the output shaft 19 of the present transmission. The gear 18 meshes with the gear 14 of the second input/output end 2, and constitutes the transmission output end of the first mechanical transmission line a. The high speed clutch 23 is mounted between a high-speed gear 22 and the output shaft 19. The gear 22 meshes with the gear 15 at the third input/output end 3, and constitutes the transmission output end of the second mechanical transmission line b.

The hydromechanical transmission further has speed-detecting means 24 for detecting the rotational speeds of the gears 18 and 22 forming the transmission output ends of the mechanical transmission lines a and b, torque-detection means 25 for detecting the way torque transmission is achieved at the gears 18 and 22, and control means 26. This control means 26 acts to engage clutches 21 and 23 when the rotational speeds of the gears 18 and 22 which are detected by the detecting means 24 become equal. The control means 26 further corrects the transmission ratio of the hydraulic power transmission mechanism 8 until the way torque transmission is achieved at one transmission output end and at the other transmission output end respectively, are interchanged as detected by the detecting means 25. Upon completion of the correction, the control means 26 disengages that clutch 21 or 23 through which torque is no longer transmitted.

More specifically, the speed-detection means 24 comprises a pair of speed sensors 24a, 24b. One sensor 24a detects the rotational speed of the low-speed gear 18 and converts it into a corresponding electrical signal. The other sensor 24b detects the rotational speed of the high-speed gear 22 and converts it into a corresponding electrical signal.

The torque-detection means 25 comprises a pair of pressure sensors, 25a, 25b. One sensor 25a detects the pressure inside the circuit portion 16a of the hydraulic circuit 16 of the hydraulic transmission mechanism 8 which is subjected to high pressure when the low-speed mode is selected, and converts said pressure detected into a corresponding electrical signal. The other sensor 25b detects the pressure inside the circuit portion 16b of the hydraulic circuit 16 which undergoes a high pressure when the high-speed mode is selected.

The control means 26 has an actuator 27 for changing the displacement of the pump/motor and a computer 28 for controlling the actuator 27 and the clutches 21,23. The actuator 27 consists of an electro-hydraulic servomechanism or similar. Where the pump/motor of the variable displacement type is of the swash plate type or the bent axis type, the angle of the swash plate or the bent axis is varied. Where the pump-motor 7 is of the radial piston type or the static pressure balanced type, the eccentricity of the pintle is varied.

The computer 28 is an ordinary microcomputer system constituted of a central processing unit (CPU) 29, a memory 30, and an interface 31. The interface 31 receives signals from the rotational speed sensors 24a, 24b and from the pressure sensors 25a, 25b. The interface 31 delivers instruction signals to the actuator 27 and to the clutches 21, 23. A program has been previously stored in some portions of the memory 30 to perform the following operations. In the low-speed mode where only the low-speed clutch 21 is engaged, the rotational speed of the high-speed gear 22 increases until it is found to have reached the rotational speed of the low-speed gear 18, whereupon an instruction signal is also sent to the high-speed clutch 23 to engage it. As a result, the clutches 21 and 23 are engaged. The output value P and Q which are detected at this time by the pressure sensors 25a and 25b, respectively, are temporarily stored in the memory 30. Thereafter, an instruction signal for correction is delivered to operate the actuator 27. This operation is continued until the values of the output signals from the sensors 25a and 25b assume the values of Q and P, respectively, conversely as stored in the memory 30. Then, the actuator 27 is stopped and the low speed clutch 21 is disengaged. Thus, the system is switched to high-speed mode. When the system is switched from the high-speed mode to the low-speed mode, the clutches 21 and 23 are engaged or disengaged and the actuator 27 is operated in a similar way.

In the illustrated embodiment, rotary power from an engine or the like is applied to the input shaft 13 provided at the input/output end 1 of the differential mechanism 4. Rotary power is delivered from the output shaft 13 which is connected to the second input/output end 2 or the third input/output end 3 through the mode selection mechanism 9. Then, the power is transmitted to the driving wheels of a vehicle or the like.

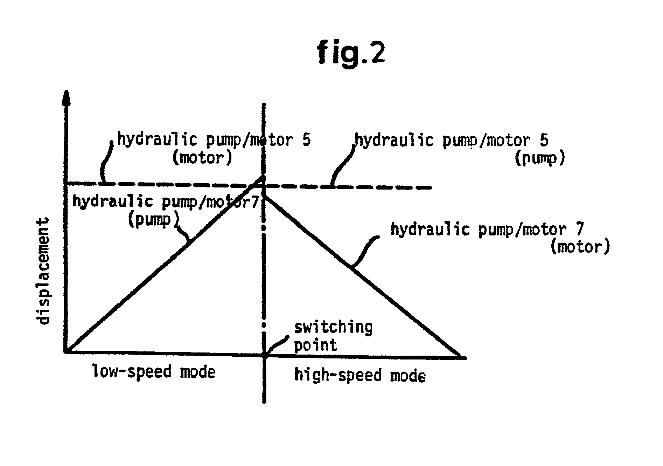

In the operation of the hydromechanical transmission constructed as described above, when the low-speed is selected, the low-speed clutch 21 is engaged but the high-speed clutch 23 is not engaged. Under this condition, the output is connected to the input through the low-speed mechanical transmission line a formed between the first end 1 and the second end 2 of the differential mechanism 4. Thus, a portion of the power applied is transmitted to the output shaft 19 via the mechanical transmission line a. At this time, as shown in Fig. 2, the pump/motor 7 acts as a pump, while the pump/motor 5 acts as a motor. Accordingly, the rotary power appearing at the third end 3 of the differential mechanism 4 is transmitted to the output shaft 19 via the hydraulic transmission line A that is formed between the pump/motors 7 and 5. In this low-speed mode, when the displacement of the pump/motor 7 is increased, the rotational speed of the output shaft 19 increases relatively to the rotational speed of the input shaft 13. More specifically, when the displacement of the pump/motor having a variable displacement is zero, the third input/output end 3 of the differential mechanism 4 substantially runs idle. Therefore, the output shaft 19 connected to the second input/output end 2 of the differential mechanism 4 is substantially at a standstill. Then, as the displacement of the pump/motor 7 is increased, the rotational speed at the third end 3 decreases relatively, and the speed at the second end 2 increases relatively, and when the two speeds are equal to each other, the clutch 21 of the mode selection mechanism 9 is disengaged, while the high-speed clutch 23 is engaged to select the high-speed mode. In this state, the switching operation is carried out as described later to select the high-speed mode.

In this high-speed mode, the mechanical transmission line b is formed between the first end 1 and the third end 3 of the differential mechanism 4 and a portion of the power applied is transmitted to the output shaft 19 via this line b. At this time, as shown in Fig. 2 the pump/motor 7 functions as a motor while the pump-motor 5 acts as a pump. Thus, the rotary power appearing at the second end 2 of the differential mechanism 4 is transmitted to the output shaft 19 via the hydraulic transmission line B that is formed between the pump/motors 5 and 7. In this high-speed mode, as the displacement of the pump/motor 7 is reduced, the rotational speed of the output shaft 19 increases relatively to the rotational speed of the input shaft 13. In other words, as the displacement of the pump/motor 7 is reduced, the speed at the third end 3 increases while the rotational speed at the second end 2 decreases.

The system is switched from the low-speed mode to the high-speed mode in the manner described hereafter. The rotational speed of the high-speed gear 22 approaches the rotational speed of the low-speed gear 18 until it becomes equal to said speed. At this instant, the control means 26 issues an instruction signal to engage the high-speed clutch 23. Thus, both clutches 21 and 23 are momentarily simultaneously engaged. The output values P and Q obtained from the pressure sensors 25a and 25b are still temporarily stored in the memory 30. Under this condition, torque is transmitted from the low-speed gear 18 through the first mechanical transmission line a to the output shaft 19, (common output rotary element), but no torque is transferred from the high-speed gear 22 through the second mechanical transmission line b to the output gear 19. Then, an instruction signal for correction is delivered from the computer 28 to the actuator 27 so that the actuator 27 operates to reduce the displacement. This operation is continued until the output values from the sensors 25a and 25b become equal to Q and P, respectively, previously stored in the memory 30. More specifically, the displacement of the pump/motor is corrected until the output value from the sensor 25a changes from a high pressure value P to a low pressure value Q and the output value from the sensor 25b varies from Q to P. In the course of this operation, the roles of the two pump/motors 5 and 7 are completely interchanged. In other words, the pump/motor that worked as a hydraulic pump acts now as a motor, while the pump/motor that operated as a motor functions as a hydraulic pump. As a result, torque is no longer transferred from the low-speed gear 18 to the output shaft 19, but from the high-speed gear 22 to the output shaft 19. Then, the correcting operation performed by the actuator 27 is stopped. At the same time, the low speed clutch 21 is disengaged to definitively switch the system to the high-speed mode. When the system is switched from the high-speed mode to the low-speed mode, clutches 21 and 23 are engaged or disengaged and the actuator 27 is operated in a similar manner.

Since the novel transmission is constructed as described thus far, when it is switched from one mode to the other, the rotational speed and the torque change continuously, permitting switching the mode without producing shocks. Moreover, the novel transmission is relatively simple in structure and easy to manufacture in practice, because it simply controls the instant at which the roles of the clutches 21 and 23 are interchanged and slightly corrects the transmission ratio of the hydraulic power transmission mechanism 8.

Although the differential mechanism is not limited to a planetary gear train, the use of such a gear train facilitates making the system compact. Moreover, the hydraulic power transmission mechanism is of course not limited to the structure described above and various changes and modifications may be made thereto without departing from the scope of the invention. For instance, both the pump/motors may be of the variable displacement type.

Further more, the control means is not limited to a means using an electronic computer. A hydraulic control device equipped with a hydraulic logical circuit may also be employed. In the above embodiment, the differential mechanism is disposed on the input side to divide the input power. The invention is not limited to this structure. For example, it is also applicable to a structure where the output power is divided.

Since the novel hydromechanical transmission is constructed as described thus far, it is equipped with a relatively simple structure that prevents with certainty shocks from occurring when the transmission is switched from one mode to the other.

**Claims**

1. A hydromechanical transmission comprising: a differential mechanism (4) having first, second, third input/output ends (1, 2, 3) for forming either a first low-speed mechanical transmission line (a) between the first (1) and second (2) input/output ends or a second high-speed mechanical transmission line (b) between the first (1) and third (3) input/output ends;

a hydraulic power transmission mechanism (8) comprising a pair of hydraulic pump/motor (5, 7), one of which acting as a hydraulic pump when the other acts as a hydraulic motor, with the input/output shaft (5a) of one (5) of the pump/motors being connected to the second input/output end of the differential mechanism and the input/output end of the differential mechanism and the input/output eshaft (7a) of the other pump/motor (7) connected to the third input/output end, both pump/motors (5, 7) cooperating to constitute continuous variable hydraulic power transmission lines (A, B); a first low-speed clutch (21) acting to bring the transmission output end (18) of the first mechanical transmission line (a) into and out of engagement with a common output rotary element (19);

a second high-speed clutch 23 acting to bring the transmission output end (22) of the second mechanical transmission line (b) into and out of engagement with said common rotary element (19), said second clutch (23) being engaged when the first clutch is disengaged and conversely for selecting either a low-speed mode or a high-speed mode; characterized in that it further comprises: speed-detection means (24) for detecting the rotational speeds at the transmission output ends (18, 22) of the mechanical transmission lines (a, b); torque-detection means (25) for detecting the way torque transmission is achieved at said transmission ends (18, 22), and consisting of a pair of pressure sensors (25a, 25b); and control means (26) for engaging both the clutches (21, 23) when the rotational speeds at both the transmission ends (18, 22) that are detected by the speed-detection means (25) become equal, for correcting the change speed ratio of the hydraulic power transmission mechanism (8) until the ways torque transmission is individually achieved by both said transmission output ends (18, 22) as detected by the pressure sensors are interchanged, and for disengaging the clutch (21, 23) through which torque is no longer transmitted when the correction has been completed.

2. A hydrochmechanical transmission as set forth in claim 1, characterized in that said speed-detection means consists of a pair of rotational-speed sensors (24a, 24b).

3. A hydromechanical transmission as set forth in claim 1, characterized in that said pair of pressure sensors (25a, 25b) are oppositely mounted in the hydraulic circuit (16).

4. A hydromechanical transmission as set forth in claim 1, characterized in that said control means (26) includes an electronic computer (28).

5. A hydromechanical transmission as set forth in claim 1, characterized in that said control means (26) includes a hydraulic control apparatus.

6. A hydromechanical transmission as set forth in claim 1, characterized in that said pump/motor (5) being connected to the second input/output end (2) of the differential mechanism is of the fixed displacement type, while the pump/motor (7) being connected to the third input/output end is of the variable displacement type and in that said control means (26) comprises an actuator (27) for varying the displacement of said pump/motor (7) and a computer (28) for controlling the actuator (27) and the two clutches (21, 23).

7. Utilization of a hydromechanical transmission according to any of claims 1 to 6 characterized in that said common output rotary element (19) is used as an input element for the transmission.

**Patentansprüche**

1. Hydraulisches Getriebe, bestehend aus: Einem Differentialmechanismus (4) mit ersten, zweiten, dritten Eingängen/Ausgängen (1, 2, 3), um entweder einen ersten mechanischen Übertragungsweg (a) geringer Geschwindigkeit zwischen den ersten (1) und zweiten (2) Eingängen/Ausgängen oder einen zweiten mechanischen Übertragungsweg (b) hoher Geschwindigkeit zwischen den ersten (1) und dritten (3) Eingängen/Ausgängen bereitzustellen; einen hydraulischen Kraftübertragungsmechanismus (8) bestehend aus einem Elementenpaar Hydraulikpumpe/Motor (5, 7), von dem ein Teil als Hydraulikpumpe arbeitet und das andere als Hydraulikmotor, wobei die Eingangs-/Ausgangs-Welle (5a) eines der Teile (5) von Pumpe/Motor mit dem zweiten Eingang/Ausgang des Differentialmechanismus und die Eingangs-/Ausgangs-Welle (7a) des anderen Teils von Pumpe/Motor (7) mit dem dritten Eingang/Ausgang verbunden ist und Pumpe/Motor (5, 7) zur Bereitstellung stufenlos veränderbarer hydraulischer Kraftübertragungswege (A, B) zusammenwirken;

einer ersten Kupplung (21) für geringe Geschwindigkeiten, mit der der Abtrieb (18) des ersten mechanischen Übertragungsweges (a) in Eingriff und außer Eingriff mit einem gemeinsam abführenden Drehelement (19) gebracht wird;

einer zweiten Kupplung (23) für hohe Geschwindigkeiten, mit der der Abtrieb (22) des zweiten mechanischen Übertragungsweges (b) in Eingriff und außer Eingriff mit dem gemeinsamen Drehelement (19) gebracht wird, wobei die zweite Kupplung (23) in Eingriff ist, sofern die erste Kupplung außer Eingriff ist und umgekehrt, um entweder eine langsame oder eine schnelle Arbeitsweise auszuwählen; zusätzlich gekennzeichnet durch:
Mittel zur Geschwindigkeitserfassung (24) zum Erfassen der Drehzahlen an den Abtrieben (18, 22) der mechanischen Übertragungswege (a, b);
Mittel zur Drehmomenterfassung (25) zum Erfassen des zu den Abtrieben (18, 22) übertragenen Drehmomentes, wobei die Mittel aus einem Paar Drucksensoren (25a, 25b) bestehen;

eine Steuereinheit (26) zum Einkuppeln beider Kupplungen (21, 23), sobald die von den Mitteln zur Geschwindigkeitserfassung (25) erfaßten Drehzahlen beider Abtriebe (18, 22) gleichgroß werden und zum Ausgleich des Übersetzungsverhältnisses des hydraulischen Kraftübertragungsmechanismus (8), bis die Größe der von den Drucksensoren erfaßten, an den beiden Abtrieben (18, 22) einzeln übertragenen Drehmomente vertauscht ist, sowie zum Auskuppeln jener Kupplung (21, 23), über welche nach erfolgtem Ausgleich Drehmoment nicht länger übertragen wird.

2. Hydromechanisches Getriebe nach Anspruch 1, dadurch gekennzeichnet, daß das Mittel zur Geschwindigkeitserfassung aus einem Paar Drehgeschwindigkeitsfühlern (24a, 24b) besteht.

3. Hydromechanisches Getriebe nach Anspruch 1, dadurch gekennzeichnet, daß das Paar Drucksensoren (25a, 25b) einander gegenüberliegend im hydraulischen Kreis (16) angeordnet ist.

4. Hydromechanisches Getriebe nach Anspruch 1, dadurch gekennzeichnet, daß die Steuereinheit (26) einen elektronischen Computer (28) umfaßt.

5. Hydromechanisches Getriebe nach Anspruch 1, dadurch gekennzeichnet, daß die Steuereinheit (26) ein hydraulisches Kontrollgerät umfaßt.

6. Hydromechanisches Getriebe nach Anspruch 1, dadurch gekennzeichnet, daß die/der mit dem zweiten Eingang/Ausgang (2) des Differentialmechanismus verbundene Pumpe/Motor (5) von einem festsetzbar verschieblichen Bautyp ist, während die/der mit dem dritten Eingang/Ausgang verbundene Pumpe/Motor (7) von einem veränderbar verschieblichen Bautyp ist und die Steuereinheit (26) über ein Betätigungsteil (27), über das sich die Verschiebung von Pumpe/Motor (7) verändern läßt und einen Computer (28) zur Kontrolle des Betätigungsteils (27) und der beiden Kupplungen (21, 23) verfügt.

7. Verwendung eines hydromechanischen Getriebes gemäß eines der Ansprüche 1 bis 6, dadurch gekennzeichnet, daß das gemeinsam abführende Drehelement (19) als Eingangselement für das Getriebe verwendet wird.

## Revendications

1. Transmission hydromécanique comportant: un mécanisme différentiel (4) ayant une première, une deuxième et une troisième extrémités d'entrée/sortie (1, 2, 3) pour constituer soit une première ligne de transmission mécanique basse vitesse (a) entre la première extrémité (1) et la deuxième extrémité (2) d'entrée/sortie, soit une deuxième ligne de transmission mécanique haute vitesse (b) entre la première extrémité (1) et la troisième extrémité (3) d'entrée/sortie, un mécanisme de transmission hydraulique de force motrice (8) comportant deux éléments hydrauliques pompe/moteur (5, 7), l'un d'eux fonctionnant comme une pompe hydraulique quand l'autre fonctionne comme un moteur hydraulique, l'arbre d'entrée/sortie (5a) de l'un (5) des éléments pompe/moteur étant relié à la deuxième extrémité d'entrée/sortie du mécanisme différentiel et l'arbre d'entrée/sortie (7a) de l'autre élément pompe/moteur (7) étant relié à la troisième extrémité d'entrée/sortie, les deux éléments pompe/moteur (5, 7) coopérant pour constituer des lignes (A, B) de transmission hydraulique de force motrice à variation continue, un premier embrayage basse vitesse (21) agissant pour mettre l'extrémité de sortie de transmission (18) de la première ligne de transmission mécanique (a) en liaison ou non avec un élément de sortie tournant commun (19), un deuxième embrayage haute vitesse (23) agissant pour mettre l'extrémité de sortie de transmission (22) de la deuxième ligne de transmission mécanique (b) en liaison ou non avec ledit élément de sortie tournant commun (19), ledit deuxième embrayage (23) étant embrayé quand le premier embrayage est débrayé et inversement pour sélectionner le mode basse vitesse ou le mode haute vitesse, caractérisé en ce qu'elle comporte en outre: des moyens de détection de vitesse (24) pour détecter les vitesses de rotation des extrémités de sortie de transmission (18, 22) des lignes de transmission mécanique (a, b), des moyens de détection de couple (25) pour détecter la voie par laquelle la transmission du couple est obtenue auxdites extrémités de transmission (18, 22), ces moyens étant constitués de deux capteurs de pression (25a, 25b), et des moyens de commande (26) pour embrayer les deux embrayages (21, 23) quand les vitesses de rotation, détectées aux deux extrémités de transmission (18, 22) par les moyens de détection de vitesse (25), deviennent égales, pour corriger le rapport de changement de vitesse du mécanisme de transmission hydraulique de force motrice (8) jusqu'à ce que les voies par lesquelles la transmission du couple est obtenue individuellement par les deux dites extrémités de sortie de transmission (18, 22), telles qu'elles sont détectées par les capteurs de pression, soient échangées entre elles, et pour débrayer l'embrayage (21, 23) par lequel le couple n'est plus transmis quand la correction est terminée.

2. Transmission hydromécanique selon la revendication 1, caractérisée en ce que lesdits moyens de détection de vitesse sont constitués de deux capteurs de vitesse de rotation (24a, 24b).

3. Transmission hydromécanique selon la revendication 1, caractérisée en ce que lesdits deux capteurs de pression (25a, 25b) sont montés en opposition dans le circuit hydraulique (16).

4. Transmission hydromécanique selon la revendication 1, caractérisée en ce que lesdits moyens de commande (26) comportent un ordinateur (28).

5. Transmission hydromécanique selon la revendication 1, caractérisée en ce que lesdits moyens de commande (26) comportent un appareil de commande hydraulique.

6. Transmission hydromécanique selon la revendication 1, caractérisée en ce que ledit élément pompe/moteur (5) relié à la deuxième extrémité d'entrée/sortie (2) du mécanisme différentiel et du type à volume déplacé fixe, tandis que l'élément pompe/moteur (7) relié à la troisième extrémité d'entrée/sortie est du type à volume déplacé variable et en ce que lesdits moyens de commande (26) comportent un organe de manœuvre (27) pour faire varier le volume déplacé dudit élément pompe/moteur (7) et un ordinateur (28) pour commander l'organe de manœuvre (27) et les deux embrayages (21, 23).

7. Utilisation d'une transmission hydromécanique , selon l'une quelconque des revendications 1 à 6, caractérisée en ce que ledit élément de sortie tournant commun (19) est utilisé comme un élément d'entrée de la transmission.

fig.1

# fig.2

displacement

hydraulic pump/motor 5
(motor)

hydraulic pump/motor 5
(pump)

hydraulic pump/motor7
(pump)

hydraulic pump/motor 7
(motor)

switching
point

low-speed mode          high-speed mode